# DEMANDE DE BREVET EUROPEEN

(11) **EP 4 803 920 A1**
(43) Date de publication de la demande: **09.09.2026**
(21) Numéro de dépôt: 26162072.8
(22) Date de dépôt: 03.03.2026
(51) Int. Cl.: G01S 7/00, G01S 13/00, G01S 13/42, G01S 13/46, G01S 13/48, G01S 13/56, H04B 7/04

(54) **SYSTÈME ET PROCÉDÉ DE DÉTECTION D'OBJET MOBILE**

(30) Priorité: 03.03.2025 FR 2502150
(71) Demandeur: Commissariat à l'Energie Atomique et aux Energies Alternatives, 75015 Paris (FR)
(72) Inventeur: SANA, Mohamed, 38054 GRENOBLE Cedex 9 (FR); DENIS, Benoit, 38054 GRENOBLE Cedex 9 (FR)
(74) Mandataire: Germain Maureau

(57) **Abrégé**

L'invention concerne un système de détection (100, 100', 200, 200') d'un objet mobile (40, 40') au sein d'un environnement de détection, le système de détection (100, 100', 200, 200') comprenant :
-une source (10) apte à émettre un rayonnement électromagnétique au sein d'une partie au moins de l'environnement de détection ;
-un réflecteur (30, 30') apte à réfléchir le rayonnement électromagnétique émis par la source (10), le réflecteur (30, 30') comprenant une surface intelligente reconfigurable présentant une directivité en entrée variable de manière à pouvoir sonder au moins deux secteurs angulaires distincts de l'environnement de détection ;
-un récepteur (20, 20') apte à recevoir le rayonnement électromagnétique réfléchi par le réflecteur (30, 30').

L'invention concerne également un procédé de détection d'un objet mobile au sein d'un environnement de détection.

## Description

### Domaine technique

La présente invention, qui appartient au domaine des télécommunications, concerne un système et un procédé de détection d'un objet mobile au sein d'un environnement.

### Etat de la technique

Les cas d'utilisation et types d'application des réseaux de communication sans fil sont de plus en plus complexes et exigeants en termes de qualité de service et débit des transmissions. C'est par exemple le cas des réseaux cellulaires de 5^{ème} génération ou réseaux de communication 5G en bandes millimétriques (ou mmWave pour « *Millimeter Wave* » en langue anglaise), lesquels peuvent souffrir des interruptions de service en cas de mauvaise gestion des obstructions susceptibles de provoquer une très forte atténuation en puissance des signaux transmis, voire une coupure des liens radio.

Il est donc nécessaire d'implémenter des solutions de gestion des ressources radio (ou RRM pour « *Radio Ressources Management* »*,* en terminologie anglaise) permettant d'assurer tant la continuité du service que de prévoir et pallier d'éventuelles coupures.

Pour ce faire, les techniques de RRM développées récemment font généralement appel à des stratégies complexes combinant allocation de puissance et de fréquences, formation et alignement de faisceaux, attributions de canaux de communication.

De plus, pour être efficaces, les solutions de RRM doivent également tenir compte tant du volume croissant des données échangées sur les réseaux de communication sans fil que de la nature et des caractéristiques toujours plus diversifiées des objets communicants.

En conséquence, les solutions de RRM sont de plus en plus complexes et coûteuses, tant sur le plan matériel que logiciel.

Dans ce contexte, l'intégration de fonctionnalités de détection de l'environnement au sein des réseaux de communication sans fil apparait avantageuse, tant pour la mise en œuvre d'applications dépendantes du contexte physique, que pour le développement de solutions de RRM à la fois plus efficaces et mieux adaptées au contexte opératoire.

En effet, l'implémentation d'une fonctionnalité de détection permet, dans le cas par exemple d'un réseau de communication 5G mmWave, d'anticiper une baisse de qualité de service due à une atténuation de la puissance du signal radio provoquée par la présence temporaire d'un objet mobile dans le voisinage d'un nœud communicant associé à une certaine station de base (ou BS pour « *Base Station* » en terminologie anglaise), et d'y remédier, par exemple en initiant une procédure de transfert intercellulaire vis-à-vis d'une autre station de base (« *handover* » en terminologie anglaise) afin d'assurer la continuité du service.

Certaines techniques de détection dans l'environnement des réseaux de communication sans fil initialement explorées nécessitaient l'utilisation de plusieurs dispositifs émetteurs et/ou récepteurs dédiés supplémentaires, ce qui les rendait peu pratiques et coûteuses matériellement.

Des solutions de détection plus récentes requièrent la présence de certains dispositifs communicants préexistant sur le réseau, qui plus est, parfois dotés de moyens matériels très spécifiques (par exemple, de systèmes antennaires sectorisés).

Certaines de ces solutions, en outre, requièrent l'établissement de phases de calibration et/ou d'apprentissage de l'environnement radio du réseau de communication sans fil à la fois fastidieuses, chronophages, et complexes sur le plan calculatoire, durant lesquelles certains dispositifs du réseau doivent en outre occuper une configuration déterminée (typiquement, en termes d'émission).

Enfin, des solutions plus économes matériellement sont adaptées pour détecter des objets mobiles proches de la liaison ou du nœud de communication surveillés, et donc des situations d'obstruction imminentes voire déjà partiellement atteintes.

Cependant, certaines de ces solutions n'offrent malheureusement qu'un champ de détection restreint, ce qui les rend incapables de détecter et/ou de localiser des objets mobiles éloignées, et donc de prédire des situations de blocage futures.

Les solutions existantes ne sont donc pas satisfaisantes, tant du point de vue de leur mise en œuvre que des résultats obtenus, et il existe donc un besoin de concevoir et développer des techniques de détection d'objets mobiles plus efficientes et fiables, dont la mise en œuvre sera profitable à la RRM ainsi qu'à d'autres applications telles que la détection d'intrusion, la reconnaissance d'activités humaines, la navigation coopérative et l'évitement de collisions, , l'industrie intelligente...

### Résumé de l'invention

La présente demande vise à remédier à tout ou certains des inconvénients précités.

A cet effet et selon un premier aspect, la présente invention a pour objet un système de détection d'un objet mobile au sein d'un environnement de détection, le système de détection comprenant :
- une source apte à émettre un rayonnement électromagnétique au sein d'une partie au moins de l'environnement de détection ;
- un réflecteur apte à réfléchir le rayonnement électromagnétique émis par la source, le réflecteur comprenant une surface intelligente reconfigurable présentant une directivité en entrée variable de manière à pouvoir sonder au moins deux secteurs angulaires distincts de l'environnement de détection ;
- un récepteur apte à recevoir le rayonnement électromagnétique réfléchi par le réflecteur.

Selon une possibilité, le réflecteur est une surface intelligente reconfigurable constituée d'un réseau planaire ou linéaire d'éléments, uniformément distribués (resp. PLA pour « *Uniform Planar Array* » ou ULA pour « Uniform Linear Array » en langue anglaise) .

De manière générale, les surfaces intelligentes reconfigurables sont des dispositifs électroniques semi-passifs présentant une fiable complexité et constitués d'une multitude d'éléments dont le comportement électromagnétique est ajustable de manière à façonner et à contrôler dynamiquement les signaux radio, selon les exigences d'une application spécifique.

Les propriétés de ces éléments (par exemple, le terme de phase de leur coefficient complexe de réflexion et/ou de transmission) peuvent être contrôlées dynamiquement pour modifier leur réponse dans le domaine électromagnétique. Elles sont contrôlées par le biais de signaux de commande spécifiques afin de modifier les signaux radio incidents, par exemple par réflexion, réfraction, focalisation, modulation, absorption ou toute combinaison de ces phénomènes.

Les surfaces intelligentes reconfigurables peuvent notamment fonctionner exclusivement en mode de réception : selon ce mode de fonctionnement, elles reçoivent et analysent le rayonnement électromagnétique émis par une source (active ou passive), en effectuant par exemple des mesures de puissance en réception. Dans ce mode de fonctionnement, les surfaces intelligentes reconfigurables intègrent au moins une chaîne de récption radiofréquence, ainsi que des moyens de mesure et/ou de calcul spécifiques à des fins de traitement des signaux électromagnétiques reçus.

Les surfaces intelligentes reconfigurables peuvent aussi fonctionner exclusivement en mode de réflexion : selon ce mode de fonctionnement, elles peuvent par exemple former un fasiceau dans au moins une direction privilégiée de l'espace pour réfléchir le rayonnement électromagnétique émis par une source (typiquement vers un récepteur déporté).

Dans ce mode de fonctionnement, Les surfaces intelligentes reconfigurables peuvent être utilisées pour orienter les signaux vers un récepteur afin d'améliorer la réception ou la qualité de la liaison radio.

En effet, placée entre une source et un récepteur radiofréquence, une surface intelligente reconfigurable permet de contrôler la façon dont le signal émis par la source se réfléchit sur cette ladite surface.

Dans le mode de fonctionnement hybride (combinant à la fois les modes de réception et réflexion), la surface réfléchit une partie du signal incident et traite l'autre partie localement, par le biais d'une chaîne de réception radiofréquence et de moyens de mesure et/ou de traitement.

Précisément, la surface intelligente reconfigurable mise en œuvre au sein du système de détection de l'invention fonctionne *a minima* en mode de réflexion, voire éventuellement en exploitant les réflexions en mode hybride.

Ainsi, la surface intelligente reconfigurable mise en œuvre dans le procédé de détection de l'invention est une surface dont les propriétés électromagnétiques peuvent être modifiées afin de contrôler la réflexion des ondes électromagnétiques sur elle-même.

De manière générale, les dispositifs du système impliqués directement dans la détection ne sont pas nécessairement co-localisés avec des nœuds communicants d'un réseau de communication dont on chercherait à protéger les liens radios, et ne sont donc pas tributaires d'un déploiement *a priori* du réseau, et peuvent même éventuellement être indépendants de tout réseau de communication préexistant.

L'invention tire donc profit des fonctionnalités des surfaces intelligentes reconfigurables en mode réflexion pour mettre en œuvre un système de détection simple et peu coûteux, pouvant par exemple ne nécessiter la présence que d'une seule source et d'un seul récepteur, tout en étant capable de couvrir un environnement de détection étendu.

De plus, la surface intelligente reconfigurable mise en oeuvre dans le procédé présente la particularité d'un double faisceau (c.-à-d. un faisceau contrôlable avant réflexion -« en entrée »- et un faisceau contrôlable après réflexion -« en sortie »-)
Grâce à la directivité variable présentée en entrée par la surface intelligente reconfigurable, l'environnement de détection peut être divisé en plusieurs secteurs angulaires (dont la largeur est typiquement liée à la largeur du lobe principale du faisceau présenté en entrée par la surface intelligente reconfigurable), ce qui permet la mise en œuvre d'une détermination de la position angulaire de l'objet mobile détecté dans le référentiel de la surface intelligente reconfigurable, au moyen d'un processus de balayage.

En effet, la surface intelligente reconfigurable présente un faisceau d'entrée d'orientation variable, ce qui lui permet de pouvoir sonder différents secteurs angulaires.

De manière avantageuse, les moyens de mesure, de calcul et/ou de traitement de signal ne sont pas intégrés sur le réflecteur, mais déporté sur le récepteur situé à distance du réflecteur.

En outre et avantageusement par rapport aux solutions existantes, le récepteur n'est pas nécessairement doté de capacités de formation de faisceau ni de dispositif(s) antennaire(s) sectorisé(s) spécifique(s), puisqu'il n'est pas lui-même chargé de sonder l'environnement.

Selon une possibilité, le système de détection de l'invention est apte à détecter la présence et/ou le mouvement d'au moins un objet mobile au sein de l'environnement de détection.

Selon une possibilité, le système de détection de l'invention est apte à détecter la présence et/ou le mouvement d'une pluralité d'objets mobiles au sein de l'environnement de détection.

Selon une possibilité, l'objet mobile est un véhicule roulant et/ou volant.

Selon une autre possibilité, l'objet mobile est un animal ou un humain.

Selon une possibilité, l'environnement de détection est principalement bidimensionnel.

Selon une possibilité, l'environnement de détection est tridimensionnel.

En tout état de cause, le système de détection de l'invention est apte à détecter la présence et/ou le mouvement tant d'un objet se déplaçant au sol de l'environnement de détection que d'un objet volant au sein de l'environnement de détection.

Par source, on se réfère à une source de rayonnement électromagnétique, ou source électromagnétique, pouvant être une source active ou une source passive.

Selon une possibilité, la source est active à l'émission, c'est-à-dire qu'elle est apte à émettre son propre rayonnement électromagnétique. Par exemple, une telle source peut être un nœud communiquant (typiquement, un terminal mobile ou une station de base d'un réseau de communication sans fil).

Selon cette possibilité, le rayonnement électromagnétique se propage dans l'environnement de détection entre la source et le réflecteur.

Selon une autre possibilité, la source est passive, c'est-à-dire qu'elle rétrodiffuse un rayonnement électromagnétique émis par une autre source (active ou passive). Par exemple, la source passive est un élément réfléchissant, par exemple une surface (reconfigurable ou non).

Selon une possibilité, le système de détection comprend une pluralité de sources.

En particulier, les signaux électromagnétiques émis par la ou les sources sont a priori non cohérents vis-à-vis du récepteur, comme vis-à-vis de potentielles autres sources environnantes.

Selon une possibilité, le récepteur est un dispositif dédié exclusivement à la réception du rayonnement électromagnétique réfléchi par la surface.

Selon une autre possibilité, le récepteur est un nœud communicant d'un réseau de communication, c'est-à-dire un équipement utilisateur / terminal mobile (UE) ou un point d'accès au réseau (BS).

En particulier, le récepteur exploite des signaux non-cohérents émis par la ou les sources et réfléchis par le réflecteur à des fins de détection de la présence et/ou du mouvement d'objets mobiles passifs présents au sein de l'environnement de détection.

Le récepteur est notamment apte à déterminer, sur la base du rayonnement électromagnétique réfléchi qu'il reçoit en provenance du réflecteur et des éventuelles variations de la puissance de ce rayonnement électromagnétique réfléchi induites par le passage de l'objet mobile dans l'un ou l'autre des secteurs angulaires sondés, au moins une information sur une éventuelle présence ou absence d'un objet mobile dans l'environnement de détection, et en particulier d'un objet mobile passif. Au gré de son déplacement, l'objet mobile peut en effet être amené à occulter tout ou partie du signal provenant de la source (vis-à-vis de la surface intelligente reconfigurable), induisant ainsi une variation de la puissance reçue (au cours du temps) pour un même secteur angulaire sondé

Le récepteur peut par exemple réaliser au moins une mesure concernant le rayonnement électromagnétique réfléchi qu'il reçoit en provenance du réflecteur.

Selon un mode de réalisation, le réflecteur présente un centre de réflecteur correspondant au sommet de chacun desdits au moins deux secteurs angulaires.

Selon une possibilité, le centre de réflecteur correspond à un point central de la surface intelligente reconfigurable.

Selon une possibilité, la surface intelligente reconfigurable est apte à sonder une pluralité de secteurs angulaires distincts de l'environnement de détection, et par exemple six secteurs angulaires distincts.

Chaque secteur angulaire forme un angle déterminé à son sommet, c'est-à-dire au niveau du centre de réflecteur.

Selon une possibilité, la surface intelligente reconfigurable présente une ouverture angulaire de faisceau d'entrée constante.

Selon un mode de réalisation, lesdits au moins deux secteurs angulaires sont contigus et non chevauchants.

Selon une possibilité, la surface intelligente reconfigurable est apte à sonder au moins trois secteurs angulaires contigus et non chevauchants.

Selon une possibilité, la surface intelligente reconfigurable est apte à sonder six secteurs angulaires contigus et non chevauchants.

Selon une possibilité, les secteurs angulaires présentent tous un angle équivalent, dont la valeur correspondant à la valeur de l'ouverture angulaire de faisceau d'entrée que présente la surface intelligente reconfigurable.

Selon un mode de réalisation, la surface intelligente reconfigurable présente une ouverture angulaire de faisceau d'entrée variable (typiquement, selon le secteur angulaire sondé).

En particulier, la surface intelligente reconfigurable présente une ouverture angulaire de faisceau programmable.

Selon ce mode de réalisation, il est possible de faire varier au cours du temps l'ouverture angulaire de faisceau d'entrée afin que la surface intelligente reconfigurable puisse sonder des secteurs angulaires présentant des angles distincts.

Aussi, il est possible de faire varier le nombre de secteurs angulaires pouvant être sondés par la surface intelligente reconfigurable.

Selon ces dispositions avantageuses, le système de détection est modulable en fonction du niveau de précision souhaité pour la détection, notamment en lien avec la résolution angulaire choisie et/ou la zone géographique à couvrir.

Selon un mode de réalisation, la surface intelligente reconfigurable présente une directivité en sortie variable.

Selon ce mode de réalisation, la surface intelligente reconfigurable présente un faisceau de sortie dont l'orientation est programmable. Ainsi, ce dernier peut être orienté dans différentes directions en des instants distincts, par exemple vers différents récepteurs espacés les uns des autres, auxquels un même réflecteur pourrait être associé, de manière à augmenter le niveau de puissance reçu et in fine la sensibilité de détection.

Selon une possibilité, la surface intelligente reconfigurable présente une ouverture angulaire de faisceau de sortie programmable et donc variable.

Selon un mode de réalisation, la surface intelligente reconfigurable présente un gain en puissance variable.

Selon ce mode de réalisation, le gain en puissance de la surface intelligente reconfigurable est programmable et il est donc possible de faire varier ledit gain en puissance au cours du temps.

Selon un mode de réalisation, le système de détection comprend au moins un réflecteur supplémentaire apte à réfléchir le rayonnement électromagnétique émis par la source, l'au moins un réflecteur supplémentaire.

Le réflecteur supplémentaire est disposé à une position distincte de la position qu'occupe le réflecteur.

Selon une possibilité, le réflecteur supplémentaire comprend également une surface intelligente reconfigurable présentant également une directivité en entrée variable de manière à pouvoir sonder également au moins deux secteurs angulaires distincts de l'environnement de détection.

Selon une possibilité, le réflecteur s'étend selon une direction de réflecteur, et le réflecteur supplémentaire s'étend selon une direction de réflecteur supplémentaire parallèle avec la direction de réflecteur, ou encore selon une direction de réflecteur supplémentaire sécante avec la direction de réflecteur.

Selon une possibilité avantageuse, les secteurs angulaires sondés par le réflecteur supplémentaire se recoupent au moins partiellement avec les secteurs angulaires sondés par le réflecteur. Ainsi, des zones plus fines de détection de l'objet mobile peuvent être définies, correspondant aux différentes intersections entre deux ou plus secteurs angulaires. Au-delà, la position de l'objet mobile peut être estimée au moyen d'un algorithme adapté, s'appuyant sur les secteurs préalablement détectés pour l'ensemble des réflecteurs.

Selon une possibilité, le système de détection comprend au moins deux réflecteurs supplémentaires, chacun étant disposé à des positions différentes, et distinctes de celle occupée par le réflecteur.Selon une possibilité, le système de détection comprend au moins un récepteur supplémentaire, l'au moins un récepteur supplémentaire étant en particulier associé à un des réflecteurs supplémentaires.

De manière générale et avantageuse, le réflecteur et chacun des réflecteurs supplémentaires sont spatialement distribués afin d'obtenir une meilleure diversité spatiale et un meilleur champ de vision global du système de détection

Avantageusement, le récepteur peut être associé non seulement au réflecteur mais également à chacun des réflecteurs supplémentaires.

Selon un mode de réalisation, le récepteur comprend des moyens de mesure aptes à réaliser au moins une mesure de puissance du rayonnement électromagnétique réfléchi par le réflecteur.

Selon une possibilité, les moyens de mesure du récepteur sont aptes à réaliser une pluralité de mesures de puissance du rayonnement électromagnétique réfléchi par le réflecteur, et en particulier aptes à mesurer la puissance des rayonnements électromagnétiques réfléchis correspondant à chacun des secteurs angulaires de l'environnement de détection sondés par le réflecteur.

Ainsi, sur une fenêtre d'observation, le récepteur est apte à produire une matrice de collecte issue de ses propres mesures de puissance et définissant l'évolution de l'état électromagnétique de l'environnement de détection sur ladite fenêtre d'observation.

Selon une possibilité, le récepteur comprend des moyens de traitement de la matrice de collecte aptes à analyser ladite matrice de collecte et à en déduire une information sur la présence et/ou la position d'au moins un objet mobile dans l'environnement de détection.

Selon une possibilité, le système de détection comprend au moins un récepteur supplémentaire.

Selon cette possibilité et lorsque le système de détection comprend un réflecteur supplémentaire, le récepteur peut être exclusivement associé au réflecteur, et le récepteur supplémentaire exclusivement associé au réflecteur supplémentaire.

Dans ce cas de figure, le réflecteur et le réflecteur supplémentaire sont aptes à diriger simultanément leur rayonnement électromagnétique réfléchi vers respectivement le récepteur et le récepteur supplémentaire.

Selon un mode de réalisation, le système de détection comprend au moins une source supplémentaire apte à émettre un rayonnement électromagnétique au sein d'une partie au moins de l'environnement de détection.

Selon une possibilité, le système de détection comprend une pluralité de sources, par exemple distribuées dans l'espace de manière aléatoire ou de manière arbitraire, chaque source de la pluralité de sources étant apte à émettre un rayonnement électromagnétique au sein d'une partie au moins de l'environnement de détection.

Ainsi, la juxtaposition des rayonnements électromagnétiques émis par chacune des sources de la pluralité de sources correspond à un rayonnement électromagnétique global se propageant dans l'environnement de détection et que le réflecteur, et éventuellement le ou les réflecteurs supplémentaires, sont aptes à réfléchir de manière à transmettre un rayonnement électromagnétique réfléchi en direction du ou des récepteurs du système de détection.

De manière avantageuse par rapport aux solutions de l'art antérieur, l'invention tire profit de toutes les sources non-cohérentes de signaux radio dans la bande de fréquence d'intérêt, que lesdites sources soient actives ou passives.

Selon un deuxième aspect, la présente invention a également pour objet un procédé de détection d'un objet mobile au sein d'un environnement de détection, le procédé de détection étant mis en oeuvre par le système de détection tel que décrit ci-dessus, le procédé de détection comprenant les étapes suivantes :
- Une source émet un rayonnement électromagnétique.
- Le réflecteur oriente son faisceau d'entrée selon une première direction afin de sonder un premier secteur angulaire, et réfléchit le rayonnement électromagnétique émis par la source.
- Le récepteur reçoit le rayonnement électromagnétique réfléchi par le réflecteur avec le faisceau d'entrée de ce dernier orienté selon la première direction.
- Le réflecteur oriente son faisceau d'entrée selon une deuxième direction, distincte de la première direction, afin de sonder un deuxième secteur angulaire distinct du premier secteur angulaire, et réfléchit le rayonnement électromagnétique émis par la source.

Le récepteur reçoit le rayonnement électromagnétique réfléchi par le réflecteur avec son faisceau d'entrée orienté selon la deuxième direction.

Selon une possibilité :
- Le récepteur met en oeuvre au moins une mesure relative au rayonnement électromagnétique réfléchi qu'il a reçu en provenance du réflecteur avec le faisceau d'entrée de ce dernier orienté selon la première direction.
- Le récepteur met en oeuvre au moins une mesure relative au rayonnement électromagnétique réfléchi qu'il a reçu en provenance du réflecteur avec le faisceau d'entrée de ce dernier orienté selon la deuxième direction.

La suite des étapes décrite ci-dessus étant répétée plusieurs fois pour chacun des secteurs angulaires initialement définis, le récepteur construit alors une matrice de collecte basée sur ses propres mesures de puissance qu'il a successivement mis en œuvre, chaque ligne de la matrice correspondant à un secteur angulaire donné.

En fonction de la matrice de collecte construite et en particulier des valeurs des mesures successives réalisées pour chacun des secteurs angulaires, le récepteur détermine au moins une information relative à une présence ou une absence d'un objet mobile au sein de l'environnement de détection, en particulier au moyen de méthodes de post-traitement de la matrice de collecte décrites dans la demande de brevet français publiée FR3144478A1.

Selon une possibilité, la construction de la matrice de collecte est réalisée sur une fenêtre d'observation de durée prédéterminée
Selon une possibilité, si la source est active elle émet son propre rayonnement électromagnétique.

Selon une possibilité, le procédé de détection comprend une étape d'association entre le récepteur et le réflecteur. Durant cette étape initiale, les secteurs angulaires aptes à être sondés par le réflecteur sont convenus, de telle sorte que le récepteur peut leur associer des mesures distinctes.

Selon une possibilité, ladite mesure est une mesure d'une puissance dudit rayonnement électromagnétique réfléchi pour chaque secteur angulaire sondé par le réflecteur.

Selon une autre possibilité, ladite mesure est une mesure d'un rapport de signal sur bruit plus interférence pour chaque secteur angulaire sondé par le réflecteur.

Selon une possibilité, ladite information relative à une présence ou une absence d'un objet mobile au sein de l'environnement de détection est déterminée en comparant l'évolution des valeurs des mesures réalisées pour chacun des secteurs angulaires, respectivement.

Selon une possibilité, ladite information relative à une présence ou une absence d'un objet mobile au sein de l'environnement de détection est une information de localisation d'un objet mobile au sein d'un des secteurs angulaires à un instant donné.

Plus précisément, l'information de localisation peut être soit une identification d'un secteur angulaire au sein duquel se trouve l'objet mobile (système de détection à mono-réflecteur), soit une zone d'incertitude ou une position (système de détection à multi-réflecteurs).

Selon une possibilité, ladite information relative à une présence ou une absence d'un objet mobile au sein de l'environnement de détection est une information prévisionnelle de la localisation d'un objet mobile à un instant ultérieur, et par exemple une identification du secteur angulaire au sein duquel l'objet mobile sera positionné à un instant futur donné, ou la position 2D/3D qu'il occupera dans l'environnement.

Les différents aspects définis ci-dessus non incompatibles peuvent être combinés.

### Brève description des figures

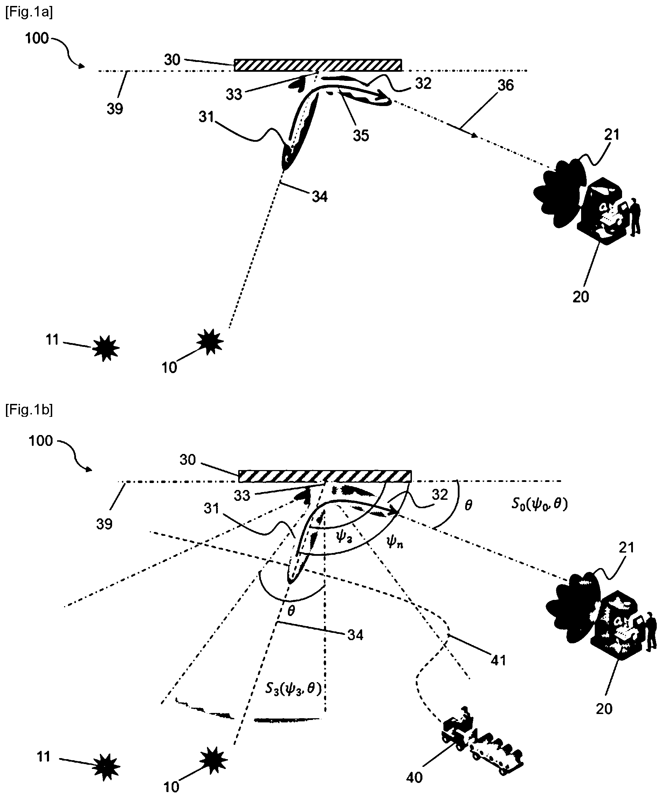

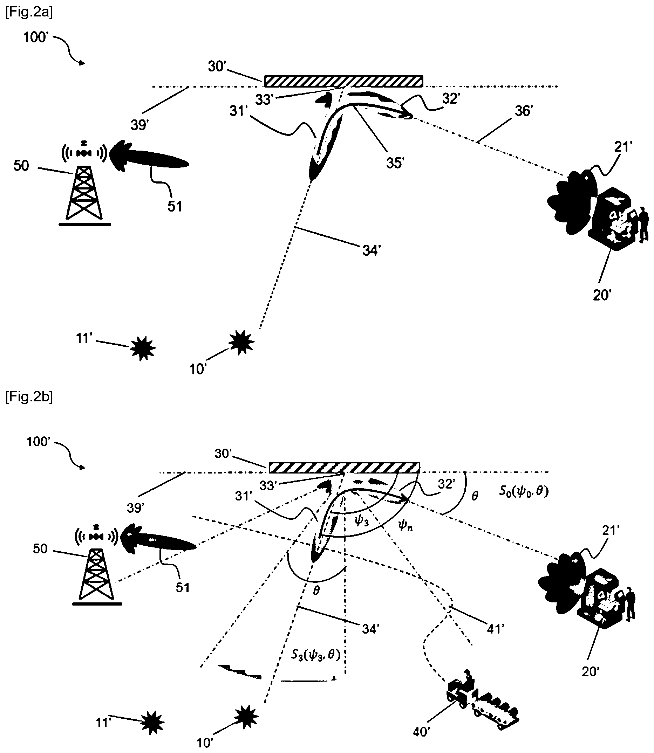

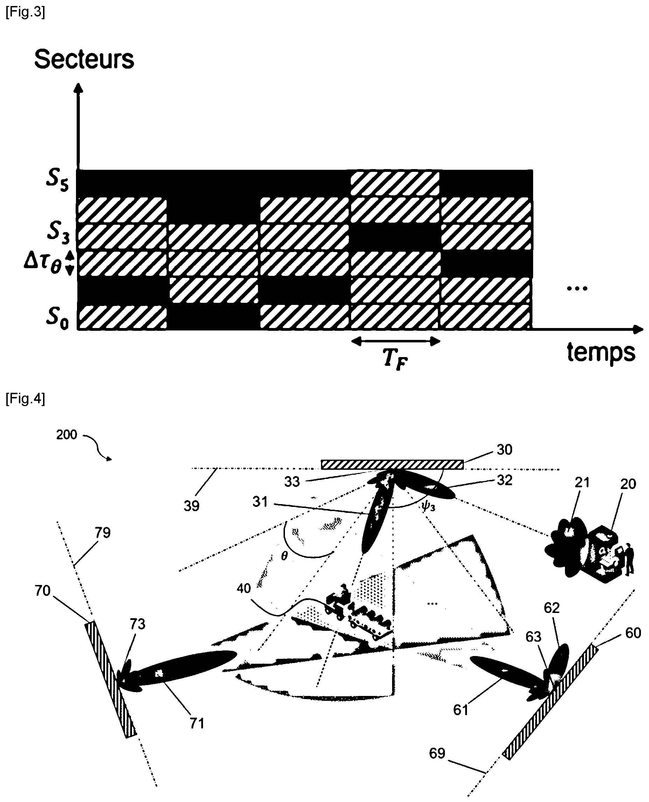

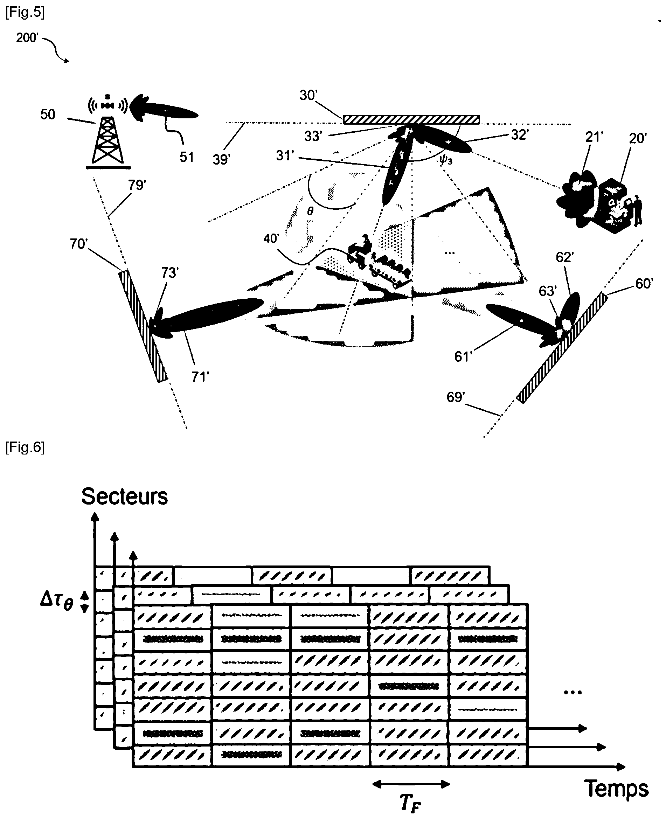

L'invention sera mieux comprise à l'aide de la description détaillée qui est exposée ci-dessous en regard des dessins annexés.
Les figures [Fig.1a] et [Fig.1b] sont respectivement, selon deux vues de dessus, une représentation simplifiée et une représentation complète d'un système de détection conforme à l'invention.
Les figures [Fig.2a] et [Fig.2b] sont respectivement, selon deux vues de dessus, une représentation simplifiée et une représentation complète d'un système de communication et de détection conjointes conforme à l'invention.
La figure [Fig.3] est une représentation d'une matrice de détection (en lien avec les durées du du protocole sous-jacent) pouvant être obtenue au moyen de la mise en oeuvre du système de détection des figures 1a et 1b, ou au moyen de la mise en oeuvre du système de communication et de détection conjointes des figures 2a et 2b.
La figure [Fig.4] est une représentation d'une variante de réalisation du système de détection conforme à l'invention.
La figure [Fig.5] est une représentation d'une variante de réalisation du système de communication et de détection conjointes conforme à l'invention.
La figure [Fig.6] est une représentation d'un ensemble de matrices de détection (en lien avec les durées des protocoles sous-jacents) pouvant être obtenues au moyen de la mise en oeuvre du système de détection de la figure 4, ou au moyen de la mise en oeuvre du système de communication et détection conjointes de la figure 5.

### Description détaillée

Dans la description détaillée qui va suivre des figures définies ci-dessus, les mêmes éléments ou les éléments remplissant des fonctions identiques pourront conserver les mêmes références de manière à simplifier la compréhension de l'invention.

Le système de détection 100 des figures 1a et 1b est configuré pour détecter au sein d'un environnement, désigné ci-après par environnement de détection, la présence et le mouvement d'un objet mobile 40, en l'occurrence un véhicule conduit par un opérateur, se déplaçant selon une trajectoire 41 sur le sol de l'environnement de détection.

Evidemment, le système de détection 100 n'est pas limité à la détection de la présence et du mouvement d'un seul et unique véhicule se déplaçant sur le sol, mais pourrait par exemple être utilisé pour détecter la présence et le mouvement d'une pluralité d'objets, dont au moins un véhicule volant.

Le système de détection 100 comprend une source 10 apte à émettre un rayonnement électromagnétique en direction d'une partie au moins de l'environnement de détection. En l'occurrence, la source 10 est une source active comprenant au moins une antenne d'émission et émettant donc elle-même un rayonnement électromagnétique.

De plus, le système de détection 100 comprend une source supplémentaire 11, laquelle est également apte à émettre un rayonnement électromagnétique en direction d'une partie au moins de l'environnement de détection. Précisément, la source supplémentaire 11 est également une source active comprenant au moins une antenne d'émission et émet donc elle-même un rayonnement électromagnétique supplémentaire (par rapport au rayonnement électromagnétique émis par la source 10).

Le système de détection 100 peut également comprendre d'autres sources électromagnétiques émettant chacune leur propre rayonnement électromagnétique, lesquels ne sont pas forcément des sources actives, mais peuvent également être des éléments passifs rétrodiffusant les signaux en provenance d'autres sources (tels que des réflecteurs).

En tout état de cause, la juxtaposition des rayonnements électromagnétiques émis dans l'environnement de détection par chacune des sources électromagnétiques du système de détection 100 correspond à un rayonnement électromagnétique global se propageant dans l'environnement de détection.

Le système de détection 100 comprend également un récepteur 20 comprenant au moins une antenne réceptrice et étant donc apte à recevoir un rayonnement électromagnétique incident. En l'occurrence, le récepteur 20 est ici un dispositif récepteur dédié exclusivement à la réception d'un rayonnement électromagnétique et à la mesure et/ou au traitement de signaux électromagnétiques à des fins de détection de la présence et du mouvement d'objets mobiles au sein de l'environnement de détection.

Le système de détection 100 comprend également un réflecteur 30, qui est en l'occurrence une surface intelligente reconfigurable (ci-après désignée par RIS), apte à réfléchir le rayonnement électromagnétique global correspondant à la juxtaposition du rayonnement électromagnétique émis par la source 10 et du rayonnement électromagnétique supplémentaire émis par la source supplémentaire 11 (et du rayonnement électromagnétique émis dans l'environnement de détection par d'éventuelles autres sources dans l'environnement du système de détection 100).

Ainsi, le réflecteur 30, en réfléchissant le rayonnement électromagnétique global, est apte à transmettre un rayonnement électromagnétique réfléchi en direction d'une partie au moins de l'environnement de détection, et en particulier en direction du récepteur 20 auquel il est associé.

Dans le contexte de l'invention, le récepteur 20 est en effet associé au réflecteur 30, c'est-à-dire que la surface intelligente reconfigurable et le dispositif récepteur dédié sont configurés de manière à ce que ce dernier puisse recevoir le rayonnement électromagnétique réfléchi par la surface intelligente reconfigurable.

Le réflecteur 30 présente un faisceau d'entrée 31, ou faisceau de détection, pour recevoir le rayonnement électromagnétique global correspondant à la juxtaposition du rayonnement électromagnétique émis par la source 10 et du rayonnement électromagnétique supplémentaire émis par la source supplémentaire 11 (et des rayonnements électromagnétiques respectifs émis par d'éventuels autres sources supplémentaires dans l'environnement du système de détection 100).

Le réflecteur 30 présente également un faisceau de sortie 32, ou faisceau de réflexion, notamment pour diriger le rayonnement électromagnétique réfléchi issu de la réflexion du rayonnement électromagnétique global en direction du récepteur 20.

Le récepteur 20 présente un faisceau de lecture 21, ou faisceau de collecte, pour recevoir le rayonnement électromagnétique réfléchi par le réflecteur 30. De plus, le récepteur 20 est capable de mesurer la puissance du rayonnement électromagnétique incident qu'il reçoit en provenance du réflecteur 30.

Dans le cas où elle est active, la source 10 peut présenter un faisceau d'émission (non représenté) afin d'émettre son rayonnement électromagnétique dans au moins une direction, et en particulier vers le réflecteur 30.

De manière similaire, dans le cas où elle est active, la source supplémentaire 11 peut présenter également un faisceau d'émission (non représenté) afin d'émettre son rayonnement électromagnétique dans au moins une direction, et par exemple vers le réflecteur 30.

La directivité en entrée du réflecteur 30 est programmable. Précisément, la directivité en entrée du réflecteur 30 est modifiable au cours du temps, ce qui signifie que le réflecteur 30 est apte à orienter son faisceau d'entrée 31 selon des directions différentes au cours du temps.

Dans l'exemple de réalisation représenté, cela permet au réflecteur 30 d'orienter son faisceau d'entrée 31 dans des directions différentes en des instants donnés afin de couvrir différents secteurs angulaires au cours du temps.

La directivité en sortie du réflecteur 30 est également programmable. Précisément, la directivité en sortie du réflecteur 30 est modifiable au cours du temps, ce qui signifie que le réflecteur 30 est apte à orienter son faisceau de sortie 32 selon des directions différentes au cours du temps.

Cela peut par exemple permettre au réflecteur 30 d'orienter son faisceau de sortie 32 vers différents récepteurs espacés les uns des autres, ou d'orienter adéquatement au cours du temps son faisceau de sortie 32 vers un récepteur mobile.

Dans l'exemple de réalisation représenté, cependant, le faisceau de sortie 32 du réflecteur 30 est constamment orienté dans une direction donnée, afin notamment d'être dirigé vers le récepteur 20 dont la position est fixe au cours du temps.

De plus, tant l'ouverture angulaire et le gain en puissance du faisceau d'entrée 31 que l'ouverture angulaire et le gain en puissance du faisceau de sortie 32 sont programmables et peuvent donc varier au cours du temps.

Par exemple, l'ouverture angulaire du faisceau d'entrée 31 du réflecteur 30 peut varier afin que le réflecteur 30 puisse couvrir des secteurs angulaires d'angle variable au cours du temps.

Dans l'exemple de réalisation représenté, l'ouverture angulaire du faisceau d'entrée 31 présente une valeur constante au cours du temps. De même, l'ouverture angulaire du faisceau de sortie 32 est également constante au cours du temps.

Le réflecteur 30 s'étend principalement, c'est-à-dire est aligné, selon une direction de réflecteur 39, et présente un centre de réflecteur 33.

Le système de communication et de détection conjointes 100' des figures 2a et 2b, s'il est similaire en bien des points au système de détection 100, est particulier en ce qu'il comprend un récepteur 20' correspondant à un équipement utilisateur (et par exemple un terminal mobile) qui n'est pas, contrairement au récepteur 20 du système de détection 100, un dispositif récepteur dédié exclusivement à la détection de la présence et du mouvement d'objets mobiles.

En d'autres termes, le récepteur 20' est un équipement communiquant comprenant au moins une antenne et équipant par exemple un utilisateur d'un réseau de communication sans fil, ledit équipement communiquant étant apte à communiquer en liaisons montante et descendante avec un point d'accès 50 dudit réseau de communication sans fil, lequel comprenant au moins une antenne, et présentant un faisceau de communication 51.

Par rapport au système de détection 100, le système de communication et de détection conjointes 100', est apte à mettre en œuvre, simultanément ou de manière alternée, des phases de détection et des phases de communication.

En d'autres termes, le système de communication et de détection conjointes 100' met en œuvre, au sein d'un réseau de communication et au moyen d'au moins certains nœuds communicants de ce réseau de communication, une détection d'objets mobiles.

Ainsi et de manière similaire au système de détection 100, le système de communication et de détection conjointes 100' est notamment apte à détecter la présence et le mouvement d'au moins un objet mobile 40' au sein d'un environnement de détection, correspondant ici en l'occurrence à un véhicule conduit par un opérateur et se déplaçant selon une trajectoire 41' sur le sol de l'environnement de détection.

Evidemment, le système de communication et de détection conjointes 100' ne se limite pas à la détection de la présence et du mouvement d'un seul et unique véhicule se déplaçant sur le sol de l'environnement de détection, mais pourrait par exemple être utile pour détecter la présence et le mouvement d'une pluralité d'objets, dont au moins un véhicule volant au sein de l'environnement de détection.

Le système de communication et de détection conjointes 100' comprend une source 10' apte à émettre un rayonnement électromagnétique en direction d'une partie au moins de l'environnement de détection. En l'occurrence, la source 10' est une source active comprenant au moins une antenne d'émission.

De plus, le système de communication et de détection conjointes 100' comprend une source supplémentaire 11', laquelle est également apte à émettre un rayonnement électromagnétique en direction d'une partie au moins de l'environnement de détection. Précisément, la source supplémentaire 11' est également une source active comprenant au moins une antenne d'émission et émet donc un rayonnement électromagnétique supplémentaire (par rapport au rayonnement électromagnétique émis par source 10').

Le système de communication et de détection conjointes 100' peut également comprendre d'autres sources électromagnétiques émettant chacune leur propre rayonnement électromagnétique, lesquels ne sont pas forcément des sources actives, mais peuvent également être des objets passifs (tels que des réflecteurs) rétrodiffusant les signaux en provenance d'autres sources.

En tout état de cause, la juxtaposition des rayonnements électromagnétiques émis dans l'environnement de détection par chacune des sources électromagnétiques du système de communication et de détection conjointes 100' correspond à un rayonnement électromagnétique global se propageant dans l'environnement de détection.

Le système de communication et de détection conjointes 100' comprend également un réflecteur 30', qui est en l'occurrence un RIS, apte à réfléchir le rayonnement électromagnétique global correspondant à la juxtaposition du rayonnement électromagnétique émis par la source 10' et du rayonnement électromagnétique supplémentaire émis par la source supplémentaire 11' (et du rayonnement électromagnétique émis dans l'environnement de détection par d'éventuels autres sources dans l'environnement du système de communication et de détection conjointes 100').

Ainsi, le réflecteur 30', en réfléchissant le rayonnement électromagnétique global, est apte à transmettre un rayonnement électromagnétique réfléchi en direction d'une partie au moins de l'environnement de détection, et en particulier en direction du récepteur 20' auquel il est associé.

Dans le contexte de l'invention, le récepteur 20' est en effet associé au réflecteur 30', c'est-à-dire que la surface intelligente reconfigurable et l'équipement communiquant sont configurés de manière à ce que ce dernier puisse recevoir le rayonnement électromagnétique réfléchi par la surface intelligente reconfigurable.

Comme le récepteur 20 du système de détection 100, le récepteur 20' est donc apte à recevoir le rayonnement électromagnétique réfléchi par la surface intelligente reconfigurable, et à effectuer des mesures et/ou des traitements des signaux électromagnétiques reçus à des fins de détection de la présence et du mouvement d'objets mobiles au sein de l'environnement de détection.

Le réflecteur 30' présente un faisceau d'entrée 31', ou faisceau de détection, pour recevoir le rayonnement électromagnétique global correspondant à la juxtaposition du rayonnement électromagnétique émis par la source 10' et du rayonnement électromagnétique supplémentaire émis par la source supplémentaire 11' (et des rayonnements électromagnétiques respectifs émis par d'éventuelles autres sources supplémentaires dans l'environnement du système de communication et de détection 100').

Le réflecteur 30' présente également un faisceau de sortie 32', ou faisceau de réflexion, pour notamment pour diriger le rayonnement électromagnétique réfléchi issu de la réflexion du rayonnement électromagnétique global en direction du récepteur 20'.

Le récepteur 20' présente un faisceau de lecture 21', ou faisceau de collecte, pour recevoir le rayonnement électromagnétique réfléchi par le réflecteur 30'. De plus, le récepteur 20' est capable de mesurer la puissance du rayonnement électromagnétique incident qu'il reçoit en provenance du réflecteur 30'.

Dans le cas où elle est active, la source 10' peut présenter un faisceau d'émission (non représenté) afin d'émettre son rayonnement électromagnétique dans au moins une direction, et en particulier vers le réflecteur 30'.

De manière similaire, dans le cas où elle est active, la source supplémentaire 11' présente également un faisceau d'émission (non représenté) afin d'émettre son rayonnement électromagnétique dans au moins une direction, et par exemple vers le réflecteur 30'.

La directivité en entrée du réflecteur 30' est programmable. Précisément, la directivité en entrée du réflecteur 30' est modifiable au cours du temps, ce qui signifie que le réflecteur 30' est apte à orienter son faisceau d'entrée 31' selon des directions différentes au cours du temps.

Dans l'exemple de réalisation représenté, cela permet au réflecteur 30' d'orienter son faisceau d'entrée 31' dans des directions différentes en des instants donnés afin de couvrir différents secteurs angulaires au cours du temps.

La directivité en sortie du réflecteur 30' est également programmable. Précisément, la directivité en sortie du réflecteur 30' est modifiable au cours du temps, ce qui signifie que le réflecteur 30' est apte à orienter son faisceau de sortie 32' selon des directions différentes au cours du temps.

Cela peut par exemple permettre au réflecteur 30' d'orienter son faisceau de sortie 32' vers différents récepteurs espacés les uns des autres, ou d'orienter adéquatement au cours du temps son faisceau de sortie 32' vers un récepteur mobile.

Dans l'exemple de réalisation représenté, cependant, le faisceau de sortie 32' du réflecteur 30' est constamment orienté dans une direction donnée, afin notamment d'être dirigé vers le récepteur 20' dont la position est fixe au cours du temps.

De plus, tant l'ouverture angulaire et le gain en puissance du faisceau d'entrée 31' que l'ouverture angulaire et le gain en puissance du faisceau de sortie 32' sont programmables et peuvent donc varier au cours du temps.

Par exemple, l'ouverture angulaire du faisceau d'entrée 31' du réflecteur 30' peut varier afin que le réflecteur 30' puisse couvrir des secteurs angulaires d'angle variable au cours du temps.

Dans l'exemple de réalisation représenté, l'ouverture angulaire du faisceau d'entrée 31' du réflecteur 30' présente une valeur constante au cours du temps. De même, l'ouverture angulaire du faisceau de sortie 32' du réflecteur 30' est également constante au cours du temps.

De manière similaire au réflecteur 30 du système de détection 100, le réflecteur 30' du système de communication et de détection conjointes 100' s'étend principalement selon une direction de réflecteur 39', et présente un centre de réflecteur 33'.

Comme représenté aux figures 1b ou 2b, les environnements de détection respectifs du système de détection 100 et du système de communication et de détection conjointes 100' sont partagés de manière identique en six secteurs angulaires contigus et non chevauchants présentant tous un même sommet qui correspond au centre de réflecteur 33, 33', et une même largeur d'angle θ telle que $θ = \frac{π}{6}$, soit 30°.

Chacun des six secteurs angulaires Sₙ (ψₙ, θ) (avec n allant de 0 à 5) est donc identifié par son orientation ψₙ par rapport à la direction de réflecteur 39, 39', et par sa largeur d'angle θ (équivalente à 30°).

Par exemple, le secteur angulaire S₃ (ψ₃, θ), mis en évidence sur les figures 1b et 2b, présente une orientation égale à ψ₃ = 105° par rapport à la direction de réflecteur 39, 39', c'est-à-dire que la droite bissectrice 34, 34' de l'angle formé au centre de réflecteur 33, 33' par le secteur angulaire S₃ forme avec la direction de réflecteur 39, 39' un angle égal à 105°.

De plus, le secteur angulaire S₃ s'étend de 15° de part et d'autre de la droite bissectrice 34, 34' et présente bien une largeur d'angle égale à 30°.

Le secteur S₀ (ψ₀, θ), avec ψ₀ = 15°, est en particulier délimité d'un côté par la direction de réflecteur 39, 39' et de l'autre côté par une droite reliant le centre de réflecteur 33, 33' au récepteur 20, 20'.

Les procédés de détection mis en oeuvre respectivement par le système de détection 100 et le système de communication et de détection conjointes 100' sont similaires et décrits ci-après.

Grâce au fait que la directivité en entrée du réflecteur 30, 30' soit programmable, et donc que l'orientation de son faisceau d'entrée 31, 31' soit modifiable au cours du temps, et à une ouverture angulaire du faisceau d'entrée 31, 31' égale à θ, le réflecteur 30, 30' est configuré pour sonder tour à tour chacun des six secteurs angulaires Sₙ (n allant de 0 à 5). En particulier sur les figures 1b et 2b, le faisceau d'entrée 31, 31' du réflecteur 30, 30' est représenté comme étant orienté de manière à sonder en particulier le secteur angulaire S₃ (ψ₃, θ).

Ainsi, pour un secteur angulaire Sₙ donné, le réflecteur 30, 30' réfléchit le rayonnement électromagnétique émis dans ce secteur angulaire par la source 10, 10', et le rayonnement électromagnétique émis dans ce secteur angulaire par la source 11, 11'.

Plus généralement, le réflecteur 30, 30' réfléchit le rayonnement électromagnétique global produit sur chacun des secteurs angulaires Sₙ par l'ensemble des sources présentes dans l'environnement de détection.

On divise le temps en des intervalles de temps T_{F} équivalents durant chacun desquels le réflecteur 30, 30' est apte à sonder au moins certains des secteurs angulaires Sₙ (ψₙ, θ), comme cela est représenté à la figure 3 dans laquelle une case hachurée correspond à un secteur angulaire effectivement sondé durant l'intervalle de temps T_{F} concerné.

Evidemment et en fonction du laps de temps Δτ_{θ} nécessaire au sondage d'un secteur angulaire Sₙ (ψₙ, θ), il est possible de définir une valeur d'intervalle de temps T_{F} de manière à ce que chacun des six secteurs angulaires Sₙ (ψₙ, θ) puisse être sondé sur chacun des intervalles temporelles T_{F}.

Une phase initiale du procédé de détection comprend une étape d'association entre le récepteur 20, 20' et le réflecteur 30, 30' permettant notamment au récepteur 20, 20' de connaître le nombre et l'ordre des secteurs angulaires distincts sondés par le réflecteur 30, 30' de manière à leur associer (de manière synchrone) une mesure.

Suite au sondage par le réflecteur 30, 30' de chacun des six secteurs angulaires Sₙ, le réflecteur 30, 30' transmet donc successivement et en identifiant le secteur angulaire Sₙ concerné, vers le récepteur 20, 20', un rayonnement électromagnétique réfléchi correspondant à chacun desdits secteurs angulaires Sₙ.

Le récepteur 20, 20' est donc apte à identifier, à tout instant, à quel secteur angulaire Sₙ correspond le rayonnement électromagnétique réfléchi.

Pour chaque secteur angulaire S (ψ, θ), en admettant la présence de K sources au sein de l'environnement de détection, et en désignant par *Pₖ*(*t*) la puissance du rayonnement électromagnétique émises par la source k (k allant de 1 à K), la puissance du rayonnement électromagnétique réfléchi par le réflecteur 30, 30' reçue au niveau du récepteur 20, 20' s'exprime par : ${P}_{s \left(ψ, θ\right)} \left(t\right) = {G}_{0} \left(t\right) \times {\sum }_{k = 1}^{K} {P}_{k} \left(t\right) {G}_{θ} \left({ψ}_{k}\right) {G}_{ϕ} \left({ψ}_{0}\right) {G}_{φ} \left(\frac{π}{2}-{ψ}_{0}\right)$
Où : *G_{θ}*(*ψₖ*) correspond au gain d'antenne que présente le faisceau d'entrée 31, 31' du réflecteur 30, 30' dans la direction de la source k,
*G_{ϕ}*(*ψ*₀) correspond au gain d'antenne que présente le faisceau de sortie 32, 32' du réflecteur 30, 30' dans la direction du récepteur 20, 20' et
${G}_{φ} \left(\frac{π}{2}-{ψ}_{0}\right)$ correspond au gain d'antenne du faisceau de lecture 21, 21' du récepteur 20, 20' lequel est dirigé vers le réflecteur 30, 30' de manière à recevoir et lire le rayonnement électromagnétique réfléchi par le réflecteur 30, 30'.

Si l'on désigne par *B*₀ la bande passante du système de détection, et par *N* la densité spectrale de puissance de bruit sur ladite bande passante, et si l'on désigne par *I*(*t*) la puissance des signaux interférents reçus dans les lobes secondaires du faisceau du récepteur 20, 20', il est possible de déterminer, pour chaque secteur angulaire S (ψ, θ), la valeur du rapport de signal sur bruit plus interférence sectorielle : ${γ}_{s \left(ϕ, α\right)} \left(t\right) = \frac{{P}_{s \left(ψ, θ\right)} \left(t\right)}{I \left(t\right) + {NB}_{0}}$

Le récepteur 20, 20' est capable de mesurer la puissance *P*_{*s(ψ,θ*)}(*t*) du rayonnement électromagnétique réfléchi par le réflecteur 30, 30' en direction du récepteur 20, 20'.

En particulier, des phases de calibration répétées (typiquement, lorsque le réflecteur 30, 30' n'est pas activé) permettent au récepteur 20, 20' de mesurer régulièrement la somme de la puissance des signaux interférents *I*(*t*) et de la puissance du bruit (elle-même égale au produit de la densité spectrale de puissance de bruit *N* par la bande passante *B*₀ du système), ce qui lui permet in fine d'en déduire la valeur de *P*_{*s*(*ψ,θ*)}(*t*).

Ainsi et puisque le réflecteur 30, 30' sonde successivement, grâce à l'orientation modifiable de son faisceau d'entrée 31, 31', chacun des secteurs angulaires S (ψ, θ), le récepteur 20, 20' mesure successivement la puissance du rayonnement électromagnétique réfléchi par le réflecteur 30, 30' en direction du récepteur 20, 20' correspondant à chacun des secteurs angulaires Sₙ (ψₙ, θ).

Le récepteur 20, 20' est donc capable, sur une fenêtre d'observation *τ* équivalente à plusieurs intervalles de temps T_{F}, de produire une matrice de collecte issue de ses propres mesures de puissance et définissant l'évolution de l'état électromagnétique de l'environnement de détection sur la fenêtre d'observation *τ* : ${Λ}_{τ , n} = \left(\begin{matrix}{P}_{{s}_{0}} \left(t-τ\right) & ⋯ & {P}_{{s}_{0}} \left(t\right) \\ ⋮ & ⋱ & ⋮ \\ {P}_{{s}_{5}} \left(t-τ\right) & ⋯ & {P}_{{s}_{5}} \left(t\right)\end{matrix}\right)$

Chacune des lignes de la matrice correspondant à l'un des six secteurs angulaires Sₙ (ψₙ, θ) (n allant de 0 à 5), et chacune des colonnes de la matrice correspondant à un des intervalles de temps T_{F} compris dans la fenêtre d'observation *τ*.

Notamment dans le cas où il n'est pas possible de sonder chacun des six secteurs angulaires Sₙ (ψₙ, θ) sur chaque intervalle de temps T_{F}, on définit avantageusement la durée de la fenêtre d'observation *τ* de façon à ce que la matrice contienne plusieurs valeurs de puissance mesurée pour chacun des six secteurs angulaires Sₙ (ψₙ, θ).

Alternativement, le récepteur 20, 20' peut déterminer une matrice de collecte sur la base des valeurs du rapport de signal sur bruit plus interférence sectorielle *γ*_{*s*(*ϕ,α*)}(*t*) défini plus haut: $Λ {′}_{τ , n} = \left(\begin{matrix}{γ}_{{s}_{0}} \left(t-τ\right) & ⋯ & {γ}_{{s}_{0}} \left(t\right) \\ ⋮ & ⋱ & ⋮ \\ {γ}_{{s}_{5}} \left(t-τ\right) & ⋯ & {γ}_{{s}_{5}} \left(t\right)\end{matrix}\right)$

Quelle que soit la matrice retenue, il est évident qu'en l'absence de perturbations électromagnétique au sein de l'environnement de détection, autrement dit si l'environnement de détection reste inchangé durant la fenêtre d'observation τ*,* les valeurs des puissances *P_{sₙ}* mesurées pour chaque secteur angulaire Sₙ (ψₙ, θ) seront constantes au cours du temps, et la matrice présentera donc, sur une ligne donnée, des valeurs sensiblement égales.

Au contraire, si l'objet mobile 40, 40' se déplace selon sa trajectoire 41, 41' au sein de l'environnement de détection durant la fenêtre d'observation *τ*, il va successivement se déplacer au sein d'au moins certains des secteurs angulaires Sₙ (ψₙ, θ) et donc obstruer au moins partiellement la propagation vers le réflecteur 30, 30' du rayonnement électromagnétique émis par au moins une des sources 10, 10', 11, 11', ce qui aura pour conséquence de perturber l'environnement électromagnétique.

Cette obstruction, en fonction du ou des secteurs angulaires au sein desquels elle se produit, engendrera donc nécessairement, pour un même secteur angulaire concerné par une obstruction, des différences dans les mesures de puissance réalisées au cours du temps au niveau du récepteur 20, 20', et donc, sur une même ligne de la matrice, des valeurs changeantes au cours de la fenêtre d'observation *τ*.

La figure 4 représente partiellement (les sources n'étant notamment pas représentés) un système de détection 200 correspondant à une variante de réalisation du système de détection 100 des figures 1a et 1b.

En plus du réflecteur 30, le système de détection comprend deux réflecteurs supplémentaires 60, 70, en l'occurrence deux RIS, également aptes respectivement à réfléchir le rayonnement électromagnétique global correspondant à la juxtaposition de chaque rayonnement électromagnétique émis dans l'environnement de détection par chacune des sources (non représentés).

Ainsi, le réflecteur supplémentaire 60 présente un faisceau d'entrée 61, et le réflecteur supplémentaire 70 présente un faisceau d'entrée 71.

Le réflecteur supplémentaire 60 présente également un faisceau de sortie 62, ou faisceau de réflexion, notamment pour diriger le rayonnement électromagnétique réfléchi, issu de la réflexion du rayonnement électromagnétique global sur le réflecteur 60, en direction du récepteur 20.

De même, le réflecteur supplémentaire 70 présente également un faisceau de sortie (non référencé sur la figure 4).

Chacun des réflecteurs supplémentaires 60, 70 est donc apte à diriger un rayonnement électromagnétique réfléchi vers le récepteur 20, le récepteur 20 étant en outre apte à orienter son faisceau de lecture 21 vers le réflecteur 30 (comme représenté sur la figure 4) ou vers l'un ou l'autre des deux réflecteurs supplémentaires 60, 70.

Ainsi, la directivité du récepteur 20 est programmable, et donc modifiable au cours du temps, ce qui lui permet de pouvoir recevoir efficacement les rayonnements électromagnétiques respectivement réfléchis par le réflecteur 30 et chacun des réflecteurs supplémentaires 60, 70.

Le réflecteur supplémentaire 60 s'étend principalement, c'est-à-dire est orienté selon une direction de réflecteur supplémentaire 69 sécante avec la direction de réflecteur 39 du réflecteur 30, et présente un centre de réflecteur supplémentaire 63.

Le réflecteur supplémentaire 70 s'étend principalement, c'est à dire est aligné, selon une direction de réflecteur supplémentaire 79 sécante avec la direction de réflecteur 39 du réflecteur 30 et sécante avec la direction de réflecteur supplémentaire 69 du réflecteur supplémentaire 60, et présente un centre de réflecteur supplémentaire 73.

La directivité en entrée du réflecteur supplémentaire 60 est programmable. Précisément, la directivité en entrée du réflecteur supplémentaire 60 est modifiable au cours du temps, ce qui signifie que le réflecteur supplémentaire 60 est apte à orienter son faisceau d'entrée 61 selon des directions différentes au cours du temps afin de couvrir différents secteurs angulaires contigus et non chevauchants présentant un même sommet correspondant au centre de réflecteur supplémentaire 63.

De même, la directivité en entrée du réflecteur supplémentaire 70 est programmable. Précisément, la directivité en entrée du réflecteur supplémentaire 70 est modifiable au cours du temps, ce qui signifie que le réflecteur supplémentaire 70 est apte à orienter son faisceau d'entrée 71 selon des directions différentes au cours du temps afin de couvrir différents secteurs angulaires contigus et non chevauchants présentant un même sommet correspondant au centre de réflecteur supplémentaire 73.

Ainsi, chacun des réflecteurs supplémentaires 60, 70 est respectivement apte à sonder un ensemble de secteurs angulaires qui lui est propre, ce qui mène à un quadrillage précis de l'environnement de détection, les secteurs angulaires respectivement sondés par le réflecteur 30' et chacun des réflecteurs supplémentaires 60, 70 se recoupant partiellement de manière à définir des zones de détection plus étroites, ce qui permet d'affiner la détection de l'objet mobile, voire d'estimer sa position au moyen d'un algorithme dédié.

La figure 5 représente partiellement (les sources n'étant notamment pas représentées) un système de communication et de détection conjointes 200' correspondant à une variante de réalisation du système de communication et de détection conjointes 100' des figures 1a et 1b.

En plus du réflecteur 30', le système de détection comprend deux réflecteurs supplémentaires 60', 70', en l'occurrence deux RIS, également aptes respectivement à réfléchir le rayonnement électromagnétique global correspondant à la juxtaposition de chaque rayonnement électromagnétique émis dans l'environnement de détection par chacune des sources (non représentées).

Ainsi, le réflecteur supplémentaire 60' présente un faisceau d'entrée 61', et le réflecteur supplémentaire 70' présente un faisceau d'entrée 71'.

Le réflecteur supplémentaire 60' présente également un faisceau de sortie 62', ou faisceau de réflexion, notamment pour diriger le rayonnement électromagnétique réfléchi, issu de la réflexion du rayonnement électromagnétique global sur le réflecteur 60', en direction du récepteur 20'.

De même, le réflecteur supplémentaire 70' présente également un faisceau de sortie (non référencé sur la figure 5).

Chacun des réflecteurs supplémentaires 60', 70' est donc apte à diriger un rayonnement électromagnétique réfléchi vers le récepteur 20', le récepteur 20' étant en outre apte à orienter son faisceau de lecture 21' vers le réflecteur 30' (comme représenté sur la figure 4) ou vers l'un ou l'autre des deux réflecteurs supplémentaires 60', 70'.

Ainsi, la directivité du récepteur 20' est programmable, et donc modifiable au cours du temps, ce qui lui permet de pouvoir recevoir efficacement les rayonnements électromagnétiques respectivement réfléchis par le réflecteur 30 et chacun des réflecteurs supplémentaires 60', 70'.

Le réflecteur supplémentaire 60' s'étend principalement selon une direction de réflecteur supplémentaire 69' sécante avec la direction de réflecteur 39' du réflecteur 30', et présente un centre de réflecteur supplémentaire 63'.

Le réflecteur supplémentaire 70' s'étend principalement selon une direction de réflecteur supplémentaire 79' sécante avec la direction de réflecteur 39' du réflecteur 30' et sécante avec la direction de réflecteur supplémentaire 69' du réflecteur supplémentaire 60', et présente un centre de réflecteur supplémentaire 73'.

La directivité en entrée du réflecteur supplémentaire 60' est programmable. Précisément, la directivité en entrée du réflecteur supplémentaire 60' est modifiable au cours du temps, ce qui signifie que le réflecteur supplémentaire 60' est apte à orienter son faisceau d'entrée 61' selon des directions différentes au cours du temps afin de couvrir différents secteurs angulaires contigus et non chevauchants présentant un même sommet correspondant au centre de réflecteur supplémentaire 63'.

De même, la directivité en entrée du réflecteur supplémentaire 70' est programmable. Précisément, la directivité en entrée du réflecteur supplémentaire 70' est modifiable au cours du temps, ce qui signifie que le réflecteur supplémentaire 70' est apte à orienter son faisceau d'entrée 71' selon des directions différentes au cours du temps afin de couvrir différents secteurs angulaires contigus et non chevauchants présentant un même sommet correspondant au centre de réflecteur supplémentaire 73'.

Ainsi, chacun des réflecteurs supplémentaires 60', 70' est respectivement apte à sonder un ensemble de secteurs angulaires qui lui est propre, ce qui mène à un quadrillage précis de l'environnement de détection, les secteurs angulaires respectivement sondés par le réflecteur 30' et chacun des réflecteurs supplémentaires 60', 70' se recoupant partiellement de manière à définir des zones de détection plus étroites, ce qui permet d'affiner la détection de l'objet mobile, voire d'estimer sa position au moyen d'un algorithme dédié.

Les procédés de détection mis en oeuvre respectivement par le système de détection 100' et le système de communication et de détection conjointes 200' sont similaires et décrits ci-après.

Une phase initiale du procédé de détection comprend une étape d'association entre le récepteur 20, 20' et le réflecteur 30, 30' d'une part et chacun des réflecteurs supplémentaires 60, 60', 70, 70' permettant notamment au récepteur 20, 20' de connaître le nombre de secteurs angulaires distincts sondés par le réflecteur 30, 30' et par chacun des réflecteurs supplémentaires 60, 60', 70, 70'.

On divise le temps en des intervalles de temps T_{F} équivalents durant chacun desquels le réflecteur 30, 30' et chacun des réflecteurs supplémentaires 60, 60', 70, 70' sont respectivement aptes à sonder au moins certains des secteurs angulaires qui leur sont respectivement associés, comme cela est représenté à la figure 6 dans laquelle une case hachurée correspond à un secteur angulaire effectivement sondé durant l'intervalle de temps T_{F} concerné.

Suite au sondage par le réflecteur 30, 30' et chacun des réflecteurs supplémentaires 60, 60', 70, 70' de chacun des six secteurs angulaires qui leur sont respectivement associés, le réflecteur 30, 30' et chacun des réflecteurs supplémentaires 60, 60', 70, 70' transmettent donc successivement et en identifiant le secteur angulaire concerné, en direction du récepteur 20, 20', un rayonnement électromagnétique réfléchi correspondant à chacun desdits secteurs angulaires.

Le récepteur 20, 20' est donc apte à identifier, à tout instant, à quel secteur angulaire Sₙ correspond le rayonnement électromagnétique réfléchi par le réflecteur 30, 30' et chacun des réflecteurs supplémentaires 60, 60', 70, 70', et peut donc produire non plus une mais trois matrices de collectes issue de ses mesures de puissance relatives aux rayonnements électromagnétiques réfléchis par le réflecteur 30, 30' et chacun des réflecteurs supplémentaires 60, 60', 70, 70' et définissant finement l'évolution de l'état électromagnétique de l'environnement de détection.

En se basant sur des mesures de puissance de signaux afin de permettre la détection de la présence éventuelle d'un objet dans différents secteurs d'un environnement, le système et le procédé de détection de l'invention ne nécessitent pas de phases complexes de synchronisation de différents signaux reçus ni la présence au sein du système de détection de source(s) dédiée(s) émettant des signaux spécifiques.

Ainsi, la présente invention propose une solution à la fois plus simple et plus universelle que les solutions existantes.

L'invention n'est évidemment pas limitée aux modes de réalisation décrits ci-dessus et représentés sur les figures, et englobe toutes variantes de réalisation envisageables par l'homme du métier. Par exemple, un système de détection selon l'invention peut comprendre à la fois plusieurs réflecteurs et plusieurs récepteurs, chaque récepteur étant associé à un réflecteur donné, c'est-à-dire dédié exclusivement à la réception et à la mesure du rayonnement électromagnétique réfléchi par ce réflecteur (qui lui est associé).

Enfin, l'invention sera avantageusement utilisée dans différentes applications telles que (liste non exhaustive) la gestion des ressources des réseaux de télécommunications, la détection d'intrusion, les véhicules intelligents...

## Revendications

1. Système de détection (100, 100', 200, 200') d'un objet mobile (40, 40') au sein d'un environnement de détection, le système de détection (100, 100', 200, 200') comprenant :
- Une source (10) apte à émettre un rayonnement électromagnétique au sein d'une partie au moins de l'environnement de détection ;
- Un réflecteur (30, 30') apte à réfléchir le rayonnement électromagnétique émis par la source (10), le réflecteur (30, 30') comprenant une surface intelligente reconfigurable présentant une directivité en entrée variable de manière à pouvoir sonder au moins deux secteurs angulaires distincts de l'environnement de détection ;
- Un récepteur (20, 20') apte à recevoir le rayonnement électromagnétique réfléchi par le réflecteur.

2. Système de détection (100, 100', 200, 200') selon la revendication 1, dans lequel le réflecteur (30, 30') présente un centre de réflecteur (33, 33') correspondant au sommet de chacun desdits au moins deux secteurs angulaires.

3. Système de détection (100, 100', 200, 200') selon la revendication 1 ou la revendication 2, dans lequel lesdits au moins deux secteurs angulaires sont contigus et non chevauchants.

4. Système de détection (100, 100', 200, 200') selon l'une des revendications précédentes, dans lequel la surface intelligente reconfigurable présente une ouverture angulaire de faisceau d'entrée variable.

5. Système de détection (100, 100', 200, 200') selon l'une des revendications précédentes, dans lequel la surface intelligente reconfigurable présente une directivité en sortie variable.

6. Système de détection (100, 100', 200, 200') selon l'une des revendications précédentes, dans lequel la surface intelligente reconfigurable présente un gain en puissance variable.

7. Système de détection (100, 100', 200, 200') selon l'une des revendications 2 à 6, comprenant au moins un réflecteur supplémentaire (60, 60', 70, 70') apte à réfléchir le rayonnement électromagnétique émis par la source (10).

8. Système de détection (100, 100', 200, 200') selon l'une des revendications précédentes, dans lequel le récepteur (20, 20') comprend des moyens de mesure aptes à réaliser au moins une mesure de puissance du rayonnement électromagnétique réfléchi par le réflecteur (30, 30').

9. Système de détection (100, 100', 200, 200') selon l'une des revendications précédentes, comprenant au moins une source supplémentaire (11) apte à émettre un rayonnement électromagnétique au sein d'une partie au moins de l'environnement de détection.

10. Procédé de détection d'un objet mobile (40, 40') au sein d'un environnement de détection, le procédé de détection étant mis en oeuvre par le système de détection (100, 100', 200, 200') de l'une des revendications 1 à 9 et comprenant les étapes suivantes :
- Emission par la source (10) d'un rayonnement électromagnétique ;
- Orientation, par le réflecteur (30, 30'), d'un faisceau d'entrée (31, 31') du réflecteur (30, 30') selon une première direction ;
- Réflexion par le réflecteur (30, 30') du rayonnement électromagnétique émis par la source (10) alors que le faisceau d'entrée (31, 31') du réflecteur (30, 30') est orienté selon la première direction ;
- Réception, par le récepteur (20, 20'), du rayonnement électromagnétique réfléchi par le réflecteur (30, 30') avec le faisceau d'entrée (31, 31') du réflecteur (30, 30') orienté selon la première direction ;
- Orientation, par le réflecteur (30, 30'), du faisceau d'entrée du réflecteur (30, 30') selon une deuxième direction distincte de la première direction ;
- Réflexion par le réflecteur (30, 30') du rayonnement électromagnétique émis par la source (10) alors que le faisceau d'entrée du réflecteur est orienté selon la deuxième direction ;
- Réception, par le récepteur (20, 20'), du rayonnement électromagnétique réfléchi par le réflecteur (30, 30') avec le faisceau d'entrée du réflecteur (30, 30') orienté selon la deuxième direction.
